# EUROPÄISCHE PATENTANMELDUNG

(11) **EP 0 894 892 A1**
(43) Veröffentlichungstag der Anmeldung: **03.02.1999**
(21) Anmeldenummer: 98109494.9
(22) Anmeldetag: 26.05.1998
(51) Int. Cl.: D21F 1/70, D21B 1/32, B03D 1/14

(54) **Verfahren und Flotationsvorrichtung zur Entfernung von Störstoffen aus einer wässrigen Faserstoffsuspension**

(30) Priorität: 16.07.1997 DE 19730464
(71) Anmelder: Voith Sulzer Papiertechnik Patent GmbH, 88191 Ravensburg (DE)
(72) Erfinder: Britz, Herbert, 88214 Ravensburg-Weissenau (DE); Gommel, Axel, 88212 Ravensburg (DE); Holik, Herbert, 88213 Ravensburg (DE); Kemper, Martin, 88213 Ravensburg (DE); Kriebel, Almut, 88250 Weingarten (DE); Mannes, Wolfgang, 88213 Ravensburg-Bavendorf (DE); Reinholdt, Boris, 88289 Waldburg (DE); Steinbild, Klaus, 88212 Ravensburg (DE)

(57) **Zusammenfassung**

Das Verfahren dient der Flotation von Störstoffen aus einer wässrigen Faserstoffsuspension (S) und wird insbesondere bei der Aufbereitung von bedrucktem oder sonstwie verschmutzten Altpapier verwendet. Dabei erfolgt die Trennung der Gasblasen (4) von der Suspension (S) in einer Flotationsschicht (3), deren Dicke (d) höchstens 100 mm betragt. Das Verfahren bringt auch bei Faserstoffsuspensionen, deren Faserstoffgehalt deutlich über 1 %, z.B. bei 2 %, liegt, gute Flotationsergebnisse.

## Beschreibung

Die Erfindung betrifft ein Verfahren zur Entfernung von Störstoffen aus einer wässrigen Faserstoffsuspension gemäß dem Oberbegriff des Anspruchs 1.

Verfahren der genannten Art werden verwendet, um aus einer faserstoffhaltigen Faserstoffsuspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so daß sie sich ausflotieren lassen. Der hier beschriebene Flotationsvorgang nutzt die Unterschiede zwischen Faserstoff und unerwünschten Feststoffteilchen in der Art, daß der Faserstoff aufgrund seiner Hydrophilie in der Faserstoffsuspension verbleibt, während die angesprochenen Festztoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotatonsdeinking" wird in der Regel nicht nur für die Entfernung von Druckfarbenpartikeln (ink = Druckfarbe) sondern auch allgemeiner für die selektive Flotation von Verunreinigungen aus Faserstoffsuspensionen verwendet.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotation zu entfernen. Schlechter wird der Effekt allerdings, wenn der Gehalt von Fasern in der Suspension relativ hoch, z.B. 2% statt wie üblich um oder unter 1% ist. In solchen Fällen treten oft Probleme auf, da bei höherem Faserstoffgehalt der Widerstand für die Gasblasen bereits hoch und damit eine Trennung von der Suspension schwierig ist. Andererseits sind höhere Stoffdichten erwünscht, um einen höheren Durchsatz erzielen zu können.

Der Erfindung liegt daher die Aufgabe zugrunde, ein Flotationsverfahren zu schaffen, mit dem gute Reinigungsergebnisse auch dann erreichbar sind, wenn die Suspension einen für solche Verfahren relativ hohen Faserstoffgehalt hat.

Diese Aufgabe wird durch die kennzeichnenden Merkmale des Anspruchs 1 in vollem Umfang gelöst.

Mit Hilfe der erfindungsgemäßen Maßnahmen können die Schwierigkeiten überwunden werden, die aufgrund der höheren Zähigkeit von der Suspension entstehen. Die mit den Störstoffen beladenen Gasblasen haben einen erhöhten Widerstand, um ihrer Aufsteigetendenz folgend aus der Suspension in den Flotationsschaum zu gelangen. Dadurch, daß die Flotation in einer relativ dünnen Flotationsschicht ausgeführt wird, müssen die Gasblasen jedoch hierfür nur einen sehr geringen Weg zurücklegen. In speziellen Ausführungsformen des erfindungsgemäßen Verfahrens kann zusätzlich die Aufsteigetendenz der Gasblasen verstärkt werden, indem ein Schwerefeld angelegt wird, welches größer ist als die Erdgravitation. Eine andere Möglichkeit von speziellen Ausführungen sieht vor, durch Impulse oder Vibrationen das Aufsteigen der Gasblasen zu beschleunigen.

Die Erfindung und ihre Vorteile werden erläutert anhand von Zeichnungen. Dabei zeigen:
- Fig. 1: schematisch: Vorrichtung zur Ausführung des erfindungsgemäßen Verfahrens;
- Fig. 2: eine Variante in perspektivischer Darstellung;
- Fig. 3 + 4: je eine Variante in Seitenansicht;
- Fig. 5 + 6: je eine mit Zentrifugalkräften arbeitende Flotationsvorrichtung;
- Fig. 7: einen zur Ausführung des Verfahrens geeigneten Flotationszyklon;
- Fig. 8-10: je eine weitere erfindungsgemäße Flotationsvorrichtung.

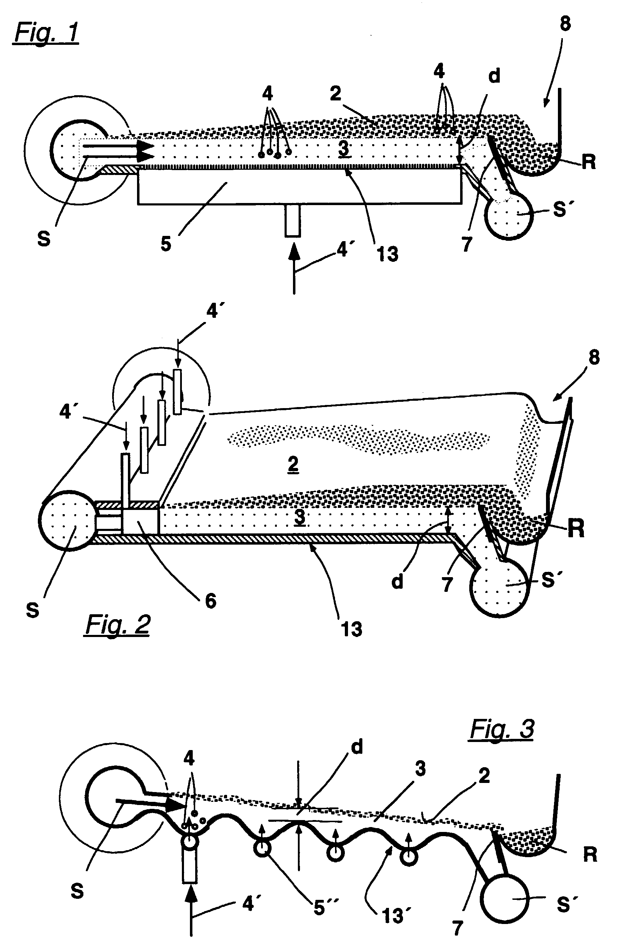

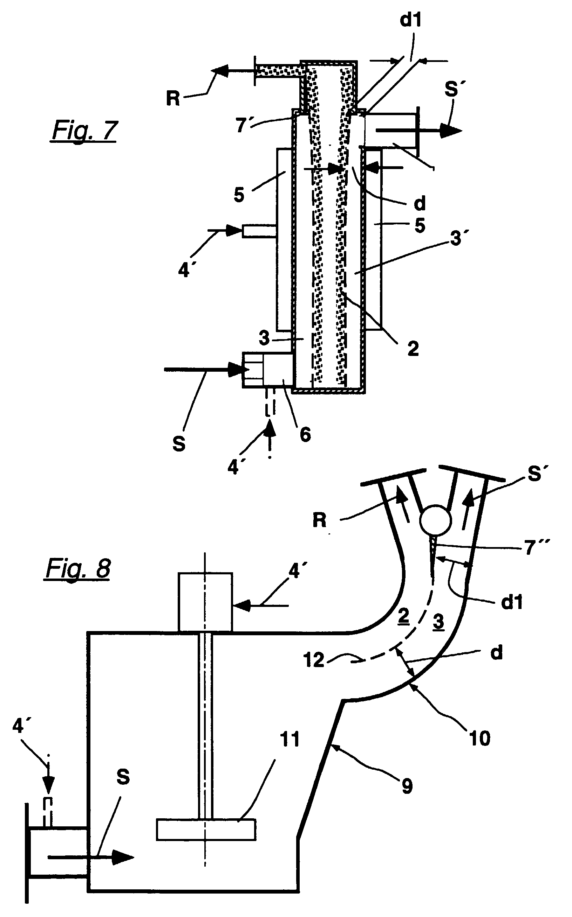

Die grundsätzlichen Schritte bei der Ausführung des erfindungsgemäßen Verfahrens zeigt die Fig. 1. Die Faserstoffsuspension S wird in eine Flotationsvorrichtung eingeleitet, wobei sich erfindungsgemäß in einem Flotationsgefäß 13 eine Flotationsschicht 3 bildet, deren Dicke d nicht größer als 100 mm ist. Diese Dicke wird durch ein Trennelement 7 definiert, welches hier als z.B. höhenverstellbares Schaumwehr ausgebildet ist, über das der Flotationsschaum 2 in die Schaumrinne 8 abfließt. Die relativ kleine Dicke der Flotationsschicht ist zur Lösung der gestellten Aufgabe entscheidend. Das Maß ist so zu verstehen, daß im flotationswirksamen Bereich - hier als Flotationsschicht 3 bezeichnet - die genannte Dicke S nicht größer sein darf. Das schließt nicht aus, daß z.B. stromaufwärts der Flotationsschicht 3 durchaus andere Verhältnisse vorliegen können. So kann z.B. der Behälter, in dem sich die Suspension befindet, eine weit über das Maß hinausgehende Tiefe aufweisen. Eine solche Ausführungsform wird später anhand der Fig. 8 noch erläutert werden. Bekanntlich wird zur Flotation eine sehr große Anzahl von Gasblasen, insbesondere Luftblasen, benötigt, von denen hier lediglich einige wenige als Gasblasen 4 eingezeichnet sind. Die Gasblasen steigen auf und sammeln sich im Flotationsschaum 2, der oberhalb der Flotationsschicht 3 aufschwimmt und anschließend als Rejekt R über die Schaumrinne 8 abgeführt wird. Hier ist die Schaumrinne 8 nahe am stromabwärtigen Ende der Flotationsschicht 3 angeordnet; sie könnte aber auch seitlich liegen, so daß der Flotationsschaum 2 quer abfließen kann.

Die zur Flotation erforderlichen Gasblasen können bereits im Suspensionszuführsystem zugemischt worden sein oder - wie hier gezeichnet - durch einen Gaszufuhrkasten 5, der sich unterhalb der Flotationsschicht 3 befindet. In diesen wird Gas 4' zugegeben. Mit Vorteil kann das zugeführte Gas 4' in Druckstößen zugeleitet werden, so daß Vibrationen in der Flotationsschicht 3 entstehen. Wenn zwischen dem Gaszufuhrkasten 5 und dem Flotationsraum 3' eine flexible und perforierte Wand, z.B. ein luftdurchlässiges Gewebe eingesetzt ist, kann auch dieses mitschwingen. Eine weitere Möglichkeit zur Erzeugung vorteilhafter Vibrationen bietet z.B. die Übertragung einer Rüttelbewegung auf eine oder mehrere Wandungen des Flotationsraumes 3'. Im übrigen ist die Begasung von zur Flotation herangezogenen Suspensionen bekannt und kann auch variiert werden. So zeigt z.B. die Fig. 2 eine ähnliche Vorrichtung wie Fig. 1. Bei dieser ist aber im Einlaufbereich der Suspension S zur Flotationsschicht 3 eine Anzahl von Stufendiffusoren 6 installiert, welche die Funktion haben, Mikroturbulenzen zu erzeugen und gleichzeitig eine sehr einfache Zufuhr von Gas 4' nach dem Injektorprinzip ermöglichen. Gerade wenn die Flotationsschicht relativ dünn ist, können die Turbulenzen, insbesondere bei Stoffdichten um 2 % die Suspension auflockern und das Aufsteigen der mit Störstoffen beladenen Luftblasen fördern.

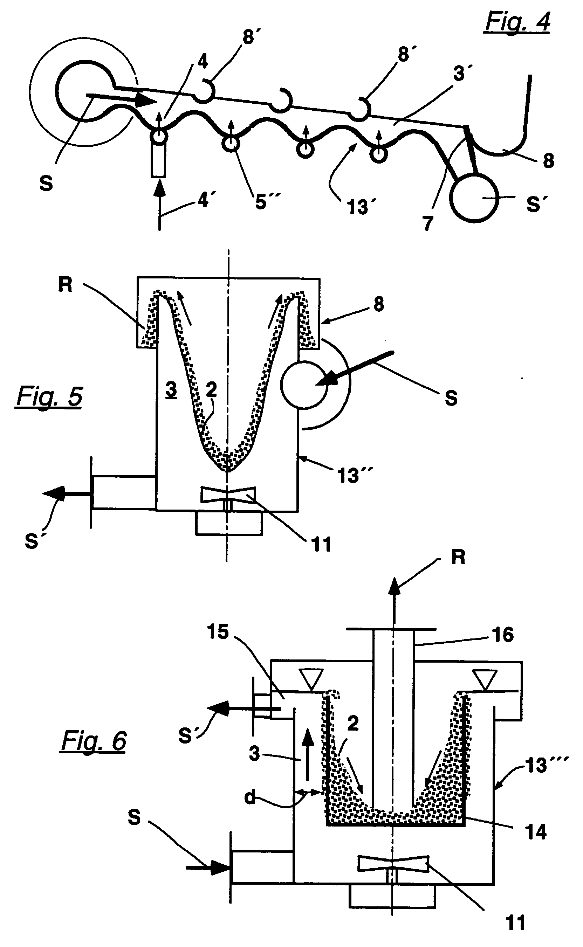

Die in Fig. 1 und 2 gezeigten Flotationsvorrichtungen haben ein im wesentlichen waagerecht liegendes Flotationsgefäß 13. Es ist aber ohne weiteres denkbar, eine leichte Neigung, insbesondere in Richtung zur Schaumrinne 8 vorzusehen, um den Schaumabfluß zu verbessern. Exemplarisch sind die in den Fig. 3 und 4 gezeigten Flotationsvorrichtungen geneigt angeordnet gezeichnet. Diese beiden Figuren zeigen aber noch weitere Besonderheiten. Dadurch, daß die untere Wandung des Flotationsgefäßes 13' wellenförmig ausgeführt ist, wird die Strömung der Faserstoffsuspension S im Flotationsraum 3' in einer solchen Weise geführt, daß der Steigweg der Luftblasen 4 unterschiedlich hoch ist. Besonders vorteilhaft ist es dann, die Zufuhr des Gases 4' durch Gaszuführungsrohre 5'' vorzunehmen, welche jeweils an den tiefen Stellen dieser gewellten Wandung angebracht sind. Dadurch ergibt sich eine längere Zeit zum Anlagern der Störstoffteilchen an die Luftblasen und dennoch die angestrebte kurze Zeit zur Trennung der Luftblasen von der Faserstoffsuspension. Diese Trennung wird daher auf einem relativ kurzen Weg, der der Dicke d entspricht, ablaufen können. Eine weitere Verbesserung kann die in Fig. 4 gezeigte Flotationsvorrichtung bringen, bei der ebenfalls die Unterwand gewellt ist. An der Trennlinie zwischen Faserstoffsuspension S und Schaum 2 befinden sich bei dieser Ausführungsform mehrere in Stromrichtung hintereinander liegende Schaumrinnen 8'. Dadurch kann der gebildete Schaum recht schnell abgeführt werden, was insbesondere die Vorteile der gewellten Unterwand nutzen kann. Selbstverständlich sind die Vorteile, die sich durch das mehrmalige Abziehen des Flotationsschaumes 2 durch hintereinander liegende Schaumrinnen ergeben, auch bei den in Fig. 1 oder 2 gezeigten Flotationsvorrichtungen möglich.

Eine weitere Effektverbesserung läßt sich erzielen, wenn die Flotation in einer Flotationsvorrichtung durchgeführt wird, in der das für die Aufsteigetendenz der Gasblasen entscheidende Kraftfeld durch Zentrifugalkräfte verstärkt wird. Konkrete Möglichkeiten, um die Zentrifugalkräfte bei der Flotation zu nutzen, werden anhand von Beispielen in den Fig. 4 bis 7 gezeigt. Fig. 5 stellt eine Flotationsvorrichtung dar mit einem tangentialen Einlauf für die Faserstoffsuspension S, wobei der Tangentialeinlauf eine Rotationsströmung innerhalb des Flotationsgefäßes 13'' bewirkt. Die Rotationsströmung kann durch einen Rotor 11 gestützt werden (Wirbelstütze). Dieser Rotor kann aber auch so ausgeführt sein und so betrieben werden, daß die Vermischung der Faserstoffsuspension S mit den Gasblasen gefördert wird; darüberhinaus kann auch das Anlagern der Störstoffpartikel an die Luftblasen verbessert werden. Die Rotation führt zu einer Trombe, an deren Oberfläche sich der Flotationsschaum 2 sammelt. Auch dadurch lassen sich relativ kurze Steigwege der Gasblasen durch die Suspension realisieren. Der gebildete Flotationsschaum 2 fließt nach außen ab und kann als Rejekt R entfernt werden. Die gereinigte Suspension S' wird in dem hier gezeigten Beispiel am unteren Teil des Flotationsgefäßes 11 abgeleitet, radial oder tangential.

Auch die in Fig. 6 gezeigte Flotationsvorrichtung weist ein rundes, z.B. zylindrisches Flotationsgefäß 13''' auf. Bei diesem wird die Faserstoffsuspension S im Bodenbereich zugegeben und ebenfalls in eine Rotationsströmung versetzt, die wiederum durch einen Rotor 11 verstärkt werden kann. Die Suspension gelangt in die oberhalb gelegene Flotationsschicht 3, welche ringförmig ausgebildet ist, nach außen durch das Flotationsgefaß 13''' und nach innen durch einen Schaumtopf 14 begrenzt. Infolge der Rotationsbewegung der Suspension drängen die Gasblasen nach innen, werden nach oben transportiert und gelangen so in den Schaumtopf 14. Die gereinigte Suspension läuft radial nach außen in einen Gutstoffringraum 15 und wird aus diesem abgeführt. Der Flotationsschaum 2, der sich im Schaumtopf 14 gesammelt hat, läßt sich z.B. als Rejekt durch ein Schaumrohr 16 absaugen.

Zwar ist die Anwendung von Zyklonen zur Flotation an sich bekannt; in der in Fig. 7 gezeigten Ausführungsform läßt sich jedoch der bereits erwähnte Vorteil nutzen, da der Flotationszyklon so gestaltet wird, daß die Flotationsschicht 3 relativ dünn bleibt. Dazu dient das Trennelement 7', hier als Ringwehr am Schaumabzug ausgebildet, das um das Maß d1 über der Innenwand des Flotationszyklons vorsteht. So ist nicht nur eine sehr kurze Steigstrecke der Gasblasen zur Trennung von Schaum 2 und Suspension S möglich, sondern es wird infolge der Randreibungseinflüsse eine weitere Auflockerung der Suspension und damit eine bessere Steiggeschwindigkeit der Gasblasen erzielt. Auch bei einem Flotationszyklon laßt sich die Gaszufuhr wiederum auf verschiedene Weise bewerkstelligen, z.B. durch Zumischen von Gas 4' unmittelbar vor Eintritt in das Flotationsgefäß (gestrichelt gezeichnet) oder durch eine poröse Außenwand des Flotationsgefässes, die von einem Gaszufuhrkasten 5 umschlossen ist. Dabei können auch in der schon erwähnten Weise Vibrationen in der Flotationsschicht erzeugt werden. Die letztgenannte Lösung dürfte bei der - erfindungsgemäß - dünnen Flotationsschicht 3 und entsprechend hoher Stoffdichte in der Suspension besonders vorteilhaft sein. Bei dem hier gezeigten Flotationszyklon wird die Suspension über einen oder mehrere Stufendiffusoren 6 zugegeben, was eine gute Vermischung der Gasblasen mit der Suspension und verbesserte Anlagerung von Störstoffen an die Gasblasen bewirkt. Die durch einen solchen Stufendiffusor erzeugbaren Turbulenzen begünstigen ebenfalls die Trennung von Gasblasen und Suspension.

In der in Fig. 8 gezeigten Flotationsvorrichtung wird die Flotationsschicht 3 auf einem relativ kurzen Strömungsweg am Auslauf eines Mischbehälters 9 erzeugt. Infolge der Krümmung des Auslaufteiles 10 wird das Flotationsschwerefeld durch Zentrifugalkraft verstärkt. Vorteilhafterweise ist stromaufwärts, also vor der Flotationsstrecke 3, eine Mischzone vorgesehen, in der mit einem Mischorgan 11 eine gute Vermischung von Luft und Faserstoffsuspension bei gleichzeitiger intensiver Anlagerung der Störstoffe an die Gasblasen erreicht wird. Das Mischorgan 11 kann ein Rührer sein oder ein feststehendes Element. Innerhalb des Mischbehälters 9 kann bereits eine Vorentmischung von Gasblasen und Suspension eintreten. Die Grenze 12 zwischen Suspension S' und Flotationsschaum 2 ist in der Figur in einer gestrichelten gebogenen Linie angedeutet. Man erkennt auch das hier als einstellbares Drehwehr ausgebildete Trennelement 7''.

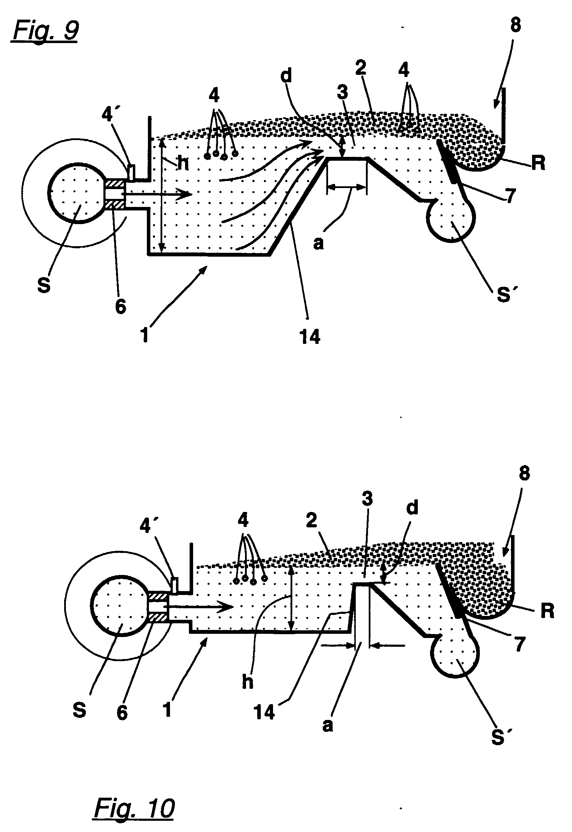

In den Fig. 9 und 10 werden Flotationsvorrichtungen gezeigt, in denen das Verfahren weiter variiert wird. In beiden Beispielen wird die Faserstoffsuspension S zunächst in eine Initialflotation 1 geführt und gelangt danach in die bereits beschriebene Flotationsschicht 3. Durch diese Kombination gelingt es in besonders vorteilhafter Weise, in einer einzigen Flotationsvorrichtung einen möglichst großen Trenneffekt zu erzielen. Im Bereich der Initialflotation 1 gelangt ein Teil der Störstoffe bereits in den Flotationsschaum 2, und zwar derjenige Anteil, der sich besonders schnell flotieren läßt. Der andere Anteil der Störstoffe, der unter besonders günstigen Bedingungen flotiert werden muß, wird anschließend aus der Flotationsschicht 3 abgeschieden, wobei es von Vorteil ist, daß hier die Schmutzkonzentration schon deutlich abgesenkt ist. Besonders bei Vorschalten einer Initialflotation ist es zweckmaßig, die Faserstoffsuspension S über Turbulenzerzeuger, hier Stufendiffusoren 6, in das Flotationsgefäß einzuleiten. Die dabei erzeugten Mikroturbulenzen können nämlich den spontanen Flotationsvorgang wesentlich verbessern.

Es ist meist vorteilhaft, wenn die Faserstoffsuspension S im Übergang von der Initialflotation 1 in die Flotationsschicht 3 beschleunigt wird. Die dabei auftretenden Scherkräfte begünstigen nämlich das Auflockern des Faserstoffes, was besonders bei Stoffdichten, die deutlich über 1 % liegen, wichtig sein kann. Die Beschleunigung läßt sich erreichen, indem die Höhe h im Bereich der Initialflotation 1 merklich größer ist als die Schichtdicke d der Flotationsschicht 3. Bei der Form gemäß Fig. 10 haben auch in der Initialflotation 1 die Gasblasen eine nur geringe Steighöhe bis zum Flotationsschaum, und die durch die Stufendiffusoren eingebrachten Mikroturbulenzen wirken sich optimal aus. Die Abschlußwand 17 steht fast senkrecht, was zu einer abrupten Beschleunigung mit entsprechend hohen Scherkräften in der Suspension führt.Insgesamt betrachtet werden also während der Initialflotation 1 die eingebrachten Mikroturbulenzen bei der Flotation genutzt und in der anschließenden Beschleunigung weitere Scherkräfte erzeugt, welche wiederum der Flotation dienen.

## Patentansprüche

1. Verfahren zur Entfernung von Störstoffen aus einer wässrigen Faserstoffsuspension (S), bei dem die Störstoffe mit Hilfe von Gasblasen (4) aus der wässrigen Faserstoffsuspension (S) in einem Flotationsschaum (2) gesammelt und abgeführt werden,
**dadurch gekennzeichnet,**
daß die Faserstoffsuspension (S) zusammen mit den zur Flotation bestimmten Gasblasen (4) in einer Flotationschicht (3) mit einer Dicke (d) von höchstens 100 mm geführt wird und dabei eine Trennung von Gasblasen (4) und Faserstoffsuspension (S) erfolgt.

2. Verfahren nach Anspruch 1 oder 2,
**dadurch gekennzeichnet,**
daß die Flotationschicht (3) eine Dicke (d) von höchstens 50 mm hat.

3. Verfahren nach Anspruch 1 oder 2,
**dadurch gekennzeichnet,**
daß die Gasblasen (4) im wesentlichen Luftblasen sind.

4. Verfahren nach Anspruch 1 oder 2,
**dadurch gekennzeichnet,**
daß die Gasblasen (4) mit einem Gas (4') gefüllt sind, das leichter ist als Luft.

5. Verfahren nach Anspruch 1,2,3 oder 4,
**dadurch gekennzeichnet,**
daß die Gasblasen (4) direkt in die Flotationschicht (3) zugegeben werden.

6. Verfahren nach Anspruch 1,2,3 oder 4,
**dadurch gekennzeichnet,**
daß die Gasblasen (4) in die Faserstoffsuspension (S) eingemischt werden, unmittelbar bevor diese in die Flotationschicht (3) eintritt.

7. Verfahren nach einem der voranstehenden Ansprüche,
**dadurch gekennzeichnet,**
daß Vibrationen auf die Flotationschicht (3) übertragen werden.

8. Verfahren nach Anspruch 7,
**dadurch gekennzeichnet,**
daß die Vibrationen durch Schütteln von Teilen der verwendeten Flotationsvorrichtung (1), die mit der Flotationsschicht (3) in Kontakt stehen, übertragen werden.

9. Verfahren nach Anspruch 7,
**dadurch gekennzeichnet,**
daß die Vibrationen durch Rührwerkzeuge in die Faserstoffsuspension (S) eingebracht werden.

10. Verfahren nach Anspruch 7,
**dadurch gekennzeichnet,**
daß die Vibrationen durch hydraulische Impulse auf die Faserstoffsuspension (S) übertragen werden.

11. Verfahren nach Anspruch 7,
**dadurch gekennzeichnet,**
daß die Vibrationen durch pneumatische Impulse auf die Faserstoffsuspension (S) übertragen werden.

12. Verfahren nach Anspruch 11,
**dadurch gekennzeichnet,**
daß die pneumatischen Impulse zusammen mit dem Gas (4' zugegeben werden, das zur Erzeugung der bei der Flotation benötigten Gasblasen (4) dient.

13. Verfahren nach einem der voranstehenden Ansprüche,
**dadurch gekennzeichnet,**
daß die Faserstoffsuspension (S) in der Flotationsschicht (3) einen Feststoffgehalt von mindestens 2 % hat.

14. Verfahren nach einem der voranstehenden Ansprüche,
**dadurch gekennzeichnet,**
daß die Faserstoffsuspension (S) nach dem Zumischen der Gasblasen (4) verdünnt und dann als Flotationsschicht (3) ausgebildet wird.

15. Verfahren nach einem der voranstehenden Ansprüche,
**dadurch gekennzeichnet,**
daß unterschiedlich große Gasblasen (4) in der Flotationsschicht (3) zugegeben werden, wobei diese Größenvariation in Strömungsrichtung der Suspension (S) erfolgt.

16. Verfahren nach einem der voranstehenden Ansprüche,
**dadurch gekennzeichnet,**
daß unterschiedlich große Gasblasen (4) in der Flotationsschicht (3) zugegeben werden, wobei diese Größenvariation in Steigrichtung der Gasblasen erfolgt.

17. Verfahren nach einem der voranstehenden Ansprüche,
**dadurch gekennzeichnet,**
daß in der Flotationsschicht (3) eine lokal begrenzte Turbulenz im Bereich der Trennschicht von Suspension (S) und Flotationsschaum (2) erzeugt wird.

18. Verfahren nach einem der voranstehenden Ansprüche,
**dadurch gekennzeichnet,**
daß die Flotationsschicht (3) sich in Strömungsrichtung mindestens 150 mm weit erstreckt.

19. Verfahren nach einem der Ansprüche 1 bis 17.
**dadurch gekennzeichnet,**
daß die Faserstoffsuspension (S) unmittelbar einer Initialflotation (1) unterzogen wird, bei der die Faserstoffsuspension (S) in einer Höhe (h) geführt wird, die größer ist als die Dicke (d) der stromabwärts unmittelbar folgenden Flotationsschicht (3).

20. Verfahren nach Anspruch 19,
**dadurch gekennzeichnet,**
daß sich die Flotationsschicht (3) in Strömungsrichtung mit einer Länge (a) zwischen 1 und 500 mm erstreckt.

21. Verfahren nach Anspruch 19 oder 20,
**dadurch gekennzeichnet,**
daß in der Faserstoffsuspension (S) Mikroturbulenzen erzeugt werden, bevor sie zur Initialflotation (1) gelangt.

22. Verfahren nach Anspruch 19,20 oder 21,
**dadurch gekennzeichnet,**
daß die Faserstoffsuspension (S) beim Eintritt in die Flotationsschicht (3) auf mindestens die doppelte mittlere Strömungsgeschwindigkeit beschleunigt wird.

23. Verfahren nach einem der voranstehenden Ansprüche,
**dadurch gekennzeichnet,**
daß die gereinigte Suspension (S) unmittelbar stromabwärts der Flotationsschicht (3) abgeführt wird.

24. Verfahren nach einem der voranstehenden Ansprüche,
**dadurch gekennzeichnet,**
daß die Trennung in einem Schwerefeld ausgeführt wird, welches größer ist als die Erdgravitation.

25. Verfahren nach Anspruch 24,
**dadurch gekennzeichnet,**
daß die Trennung in einem Flotationszyklon ausgeführt wird.

26. Verfahren nach Anspruch 25,
**dadurch gekennzeichnet,**
daß ein Teil der Gasblasen in die Suspension (S) vor Eintritt in den Flotationszyklon und der übrige Teil danach zugegeben werden.

27. Verfahren nach Anspruch 25,
**dadurch gekennzeichnet,**
daß die Trennung in einer Zentrifuge ausgeführt wird.

28. Flotationsvorrichtung (1) zur Durchführung des Verfahrens nach einem der Ansprüche 1 bis 19, das ein Flotationsgefäß (13,13', 13'', 13''') zur Aufnahme der zu bearbeitenden Faserstoffsuspension (S) enthält, mit einer Zuführung für die Suspension (S), einer Abführung für die gereinigte Suspension (S') und einer Abzugseinrichtung für den Flotationsschaum (2), welche mindestens ein Trennelement (7,7', 7'') zur Trennung des Flotationsschaumes (2) von der Suspension aufweist,
**dadurch gekennzeichnet,**
daß das Trennelement (7,7', 7'') einen Flotationsraum (3') zur Aufnahme der Faserstoffsuspension abteilt, dessen Füllhöhe ein Maß (d1) von 100 mm nicht überschreitet.

29. Flotationsvorrichtung nach Anspruch 28,
**dadurch gekennzeichnet,**
daß der Flotationsraum (3') im wesentlichen eben ist.

30. Flotationsvorrichtung nach Anspruch 28,
**dadurch gekennzeichnet,**
daß der Flotationsraum (3') eine gewellte Unterwand aufweist, wobei die Wellen quer zur Strömungsrichtung der Faserstoffsuspension (S) verlaufen.

31. Flotationsvorrichtung nach Anspruch 30,
**dadurch gekennzeichnet,**
daß Gaszuführungsrohre (5'') an der gewellten Unterwand vorhanden sind, welche an den jeweils dicksten Stellen der Flotationsschicht (3) Gasblasen (4) zugeben können.

32. Flotationsvorrichtung nach Anspruch 28,29,30 oder 31,
**dadurch gekennzeichnet,**
daß der Flotationsraum (3') zur Abzugseinrichtung für den Flotationsschaum (2) hin geneigt ist.

33. Flotationsvorrichtung nach Anspruch 28,29,30 oder 31,
**dadurch gekennzeichnet,**
daß sich am Flotationsraum (3') zumindest über einen Teil des Strömungsweges der Suspension ein Gaszufuhrkasten (5,5') erstreckt.

34. Flotationsvorrichtung nach Anspruch 33,
**dadurch gekennzeichnet,**
daß zwischen dem Gaszufuhrkasten (5,5') und dem Flotationsraum (3') eine mit einer Vielzahl von Öffnungen versehene Wand ist.

35. Flotationsvorrichtung nach Anspruch 34,
**dadurch gekennzeichnet,**
daß die Wand ein Lochblech ist.

36. Flotationsvorrichtung nach Anspruch 34,
**dadurch gekennzeichnet,**
daß die Wand ein flexibles Gewebe ist.

37. Flotationsvorrichtung nach Anspruch 33,34,35 oder 36,
**dadurch gekennzeichnet,**
daß an dem Gaszufuhrkasten (5,5') eine Luftversorgung angeschlossen ist, welche eine pulsierende Gasströmung einführt.
